# EUROPEAN PATENT APPLICATION

(11) **EP 1 605 353 A2**
(43) Date of publication of application: **14.12.2005**
(21) Application number: 05253102.7
(22) Date of filing: 19.05.2005
(51) Int. Cl.: G06F 9/445

(54) **Method for imaging computer systems**

(30) Priority: 07.06.2004 US 862242
(71) Applicant: NORTHROP GRUMMAN CORPORATION, Los Angeles, California 90067 (US)
(72) Inventor: Nelson, Richard F., Charleston, South Carolina 29406 (US); Parker, Ryan J., Charleston, South Carolina 29406 (US); Williamson, John T., North Charleston, South Carolina 29420 (US)
(74) Representative: Maury, Richard Philip

(57) **Abstract**

A method is provided for configuring a target computer system in accordance with a computer image. The method comprises the steps of determining a hardware configuration of the target system, reconfiguring a hardware abstraction layer of the target system, transferring information from the computer image to a storage device in the target computer, and using the transferred information to reconfigure the target computer.

## Description

### STATEMENT OF GOVERNMENT INTEREST

The invention described herein may be manufactured and used by or for the Government of the United States of America for governmental purposes without the payment of any royalties thereon or therefor.

### FIELD OF THE INVENTION

The present invention relates to methods and systems for creating, storing, and retrieving computer system images and for transferring the images to different computers having a similar hardware architecture.

### BACKGROUND OF THE INVENTION

Computer systems are built by installing operating systems, program applications, and files in a certain configuration or arrangement on a computer's hard drive. The files are typically installed by hand, using a non-automated process that is time consuming and requires a high level of system knowledge. This is particularly problematic for end-users who work in remote field locations and require the ability to quickly and easily build, back up, and recover their systems at a moment's notice. The process of building a system by hand can also lead to inconsistencies among computers that are supposed to be running identical applications.

System imaging has been used to provide backup/recovery functions for computer systems. However, such backup/recovery functions are typically performed on the same computer or on an identical computer. Thus each computer requires a separate image.

There is a need for a method and system for creating images of computer systems that can be transferred among computers having a similar hardware architecture.

### SUMMARY OF THE INVENTION

This invention provides a method for configuring a target computer system in accordance with a computer image. The method comprises the steps of determining a hardware configuration of the target system, reconfiguring a hardware abstraction layer of the target system, transferring information from the computer image to a storage device in the target computer, and using the transferred information to reconfigure the target computer.

### BRIEF DESCRIPTION OF THE DRAWINGS

FIG. 1 is a pictorial representation of a computer system that can be used to practice the invention.

FIG. 2 is a flow diagram that illustrates an image creation process that can be used to create images to be used in the invention.

FIG. 3 is a flow diagram that illustrates an image restoration process in accordance with the invention.

### DETAILED DESCRIPTION OF THE INVENTION

This invention provides a method and apparatus for creating, storing, and retrieving images of computer systems. Software that is used to perform the method of the invention is referred to as a System Imaging Toolkit (SIT). The configuration of a computer system may include, but is not limited to, the operating system, application programs, and files that are arranged on the computer's hard drive and are running on the computer at any given time. The images that can be used in this invention include information about the way the operating systems, applications, and files are stored in the computer. The SIT technology is designed to assist system developers with integration reuse. The SIT technology allows the concept of imaging to be extended beyond simple backup and recovery. By performing operations on the image, it can be migrated to different computer systems within the same family.

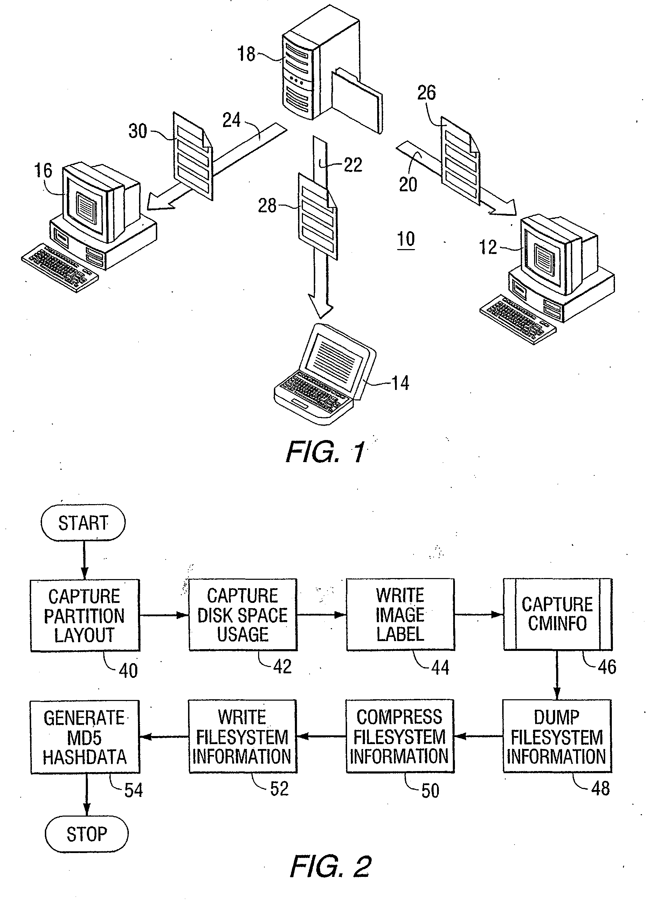

Referring to the drawings, FIG. 1 is a pictorial representation of a computer system 10 that can be used to practice the invention. The system includes a plurality of client computers 12, 14 and 16 that are configured to communicate with a server 18 over a plurality of communications links 20, 22 and 24. Images 26, 28 and 30 can be sent over the communications links, which can be wired or wireless in accordance with known technology. The server can be used to store an image library. The images in the library represent the configurations of the client computers at various points in time.

As an alternative to a networked server version of the SIT, the software can be implemented in a portable version such as on a CD, DVD, or magnetic tape, allowing for network-less image creation and restoration. The portable version may contain the full functionality of the original software or a subset of the original functionality.

The SIT software allows a user to back up images on a storage medium, such as a CD-ROM, DVD or magnetic tape, or on a network server, and retrieve the images to rebuild the configuration on the user's computer, or on any computer in the same "family of systems." Two computers are considered to be in the same "family" if they run similar operating systems and hardware architecture. For example, all SPARC-based Solaris systems, whether they are running Solaris 2.51, 2.6, 2.7, 2.8, or 2.9, are considered to belong to the same family of systems. In addition to SPARC-based Solaris systems, the SIT software may also be used in conjunction with other families of systems, e.g., Intel-based PCs running various versions of Microsoft Windows, and SPARC-based systems running various versions of Hewlett Packard UNIX.

The system employs images that are semi-portable. The semi-portable images are portable to other systems within the same family of computer systems. The semi-portable images contain a number of items such as: a complete archive of all of the files on the computer system (including operating system files); image lineage information; and configuration management information. Image lineage information includes information such as who created the image, on what machine, at what time, how many times the image was re-imaged, etc. Configuration management information includes information such as what applications are on the image, what patches are installed, and any other pertinent information.

These images can also provide users with the ability to "peek inside" to see what the image contains. This ability allows an administrator to easily determine if a certain set of systems built from a specific image has a particular application, security patch, etc. This invention can make complete backups of system libraries as well as ensure that all users can access the same system build over numerous machines in order to reduce machine dependency and facilitate more efficient work.

The SIT requires some information about the file system, the size of the software system, and the software configuration. FIG. 2 is a flow diagram that illustrates an image creation process that can be used to create images to be used in the invention. For the purposes of this description, the computer that is used to create the image will be referred to as the source computer, and the computer to which the image is being transferred is referred to as the target computer. Block 40 shows that the imaging process begins by capturing the partition layout of the hard drive of the source computer. Disk space usage is captured as shown in block 42. An image label is written (block 44) and the configuration management information (CMINFO) is captured (block 46). Then the file system information is dumped (block 48) and compressed (block 50). The file system information is written (block 52) and MDS HASHDATA is generated (block 54).

In one embodiment of the invention, the location of additional hardware information needed for image migration is stored in known locations on the image, so no additional information is collected for image migration. The CMINFO is collected for image information purposes and is primarily for the user to determine what is contained in the image. Additionally, the SIT can generate a digital signature of the image files in order to help maintain their integrity. To generate the digital signature, the image data can be run through a MD5 algorithm to generate the digital signature hash. This hash information is stored with the image so that it can be used to check the image integrity at any time. To help maintain image integrity of the image files, MD5 hashes of the image files can be generated and checked against the stored MD5 hash values.

Many fields of study in the computer science arena are structured in increasing layers of abstraction. These abstractions can be thought of as layers built up from the hardware itself. Individual layers are only dependent on the layer below and provide a level of abstraction to the layer above. By manipulating the proper items in lower abstraction layers, the operating system and application software (which exists at the higher abstraction layers) can be made to run on another computer system. One level of abstraction is referred to as a Hardware Abstraction Layer (HAL). The Hardware Abstraction Layer (HAL) is a layer of programming that allows a computer operating system to interact with a hardware device at a general or abstract level rather than at a detailed hardware level. Various types of known operating systems include a hardware abstraction layer. The hardware abstraction layer can be called from either the operating system's kernel or from a device driver. In either case, the calling program can interact with the device in a more general way than it would otherwise. The SIT manipulations are done primarily in the Hardware Abstraction Layer (HAL) of the operating system.

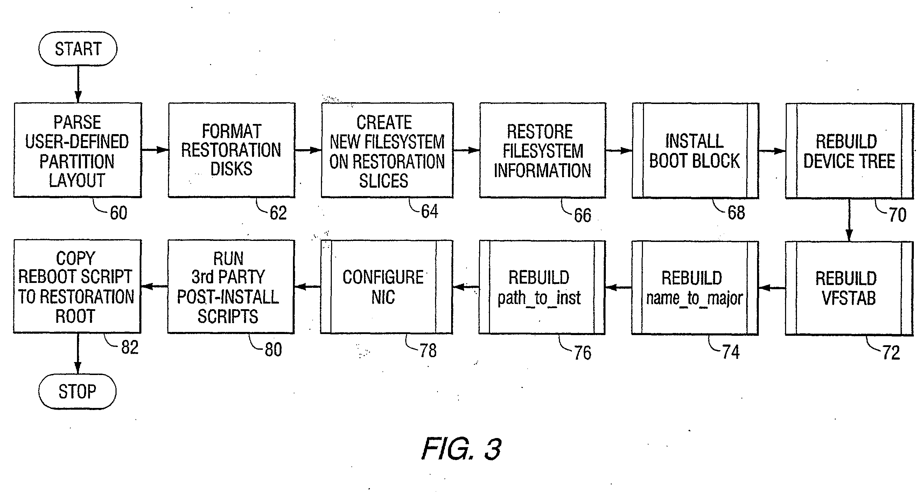

Image migration takes place during the restoration process. In general a SIT system would operate primarily at the HAL layer and would look for various differences in hardware. However, additional software modules may need to be written to address software specific configurations. Referring to FIG. 3, the system begins this process by using routines to determine hardware configuration of the target system. These may be operating system specific functions, BIOS/ROM calls, or custom programs. Information about the hardware that is gathered includes (but is not limited to): the hardware type, number of CPUs, architecture type, and amount of physical memory. This information can be gathered using both tools bundled with the Solaris operating system and custom programs written to query the hardware PROM.

Once the target hardware has been determined, the system will reconfigure the HAL to the existing devices. This reconfiguration is done on the target hardware after the image has been restored. The reconfiguration process includes the steps of creating, removing, or modifying device links in the HAL that do not exist on the target hardware so that the HAL matches the target hardware profile. If necessary, new devices links are also created. Making these modifications to the HAL to match the target hardware allows the operating system to talk to the specific hardware that exists on the target system.

Because of the abstraction given by the various layers of the software, the applications in the image are unchanged and are able to run on the new system through the reconfigured HAL. Some third party or custom software may need to be run for additional configuration that may be desired.

The SIT system allows a user to repartition (or redistribute) the software layout onto the drives that exist on the target system. Repartitioning the software layout allows the user to modify the space usage of the disk(s) in their system and/or locate software to another drive. The partition process is common knowledge to those working in the computer industry. Once the user has laid out the desired software profile using a graphical user interface (GUI) that allows users to specify how they would like to partition their system, the restoration process is started. The software profile specifies where the software is put on the disk, that is, in which partition.

Referring to FIG. 3, after a user defined partition layer is parsed (block 60), the SIT system will format storage devices (block 62), such as disk drives in the target computer, according to the desired profile, create a new file system (block 64), and write the software from the selected image to the disk to restore the file system information (block 66).

Then the system type is detected and the boot block information is written to the disk (block 68). Once this software is physically on the drives, the migration process begins. The entire device tree (HAL) is rebuilt (block 70) to conform to the new target hardware. The VFSTAB (partition map) is rebuilt (block 72) and all of the device driver major/minor numbers (that map device drivers to the HAL) are rebuilt as well (block 74).

Hardware handles are created using operating system commands and map to the specific hardware of the new system. The system then rebuilds the path_to_inst file (block 76) to reflect the new hardware handles that exist on the target hardware profile. Once the system devices are reconfigured, the system will migrate any network information to the default network interface controller (NIC) (block 78). Upon completion of this, the majority of the HAL manipulation is completed. The SIT system will then run any custom or third party software to detect and migrate any additional hardware or software (block 80). This custom software portion is designed to be a sort of library of software that can be developed and added to the system as any image migration issues are encountered. Image migration issues can include anything "new or unencountered" before, such as a third party application that requires specific configuring depending on the machine type. The SIT system allows this capability to be added easily as they are encountered. That is, the SIT system is expandable/extensible. This is a common need when any third party hardware is encountered. The capability to detect and handle foreign hardware can then be easily added to the system through this mechanism. To complete the image restoration process, the reboot script is copied to a restoration root (block 82).

Using the SIT system, the software can be migrated to any computer system that is within the same processor family. For SPARC systems this can be described in the system documentation or obtained by executing the *uname -m* command when running the Solaris OS. The SIT system is designed to be able to migrate within any processor family but not across them. For example, migration from one 4m processor based system to another 4m processor based system is OK, but migration from a 4u processor based system to a 4m processor based system will not work. However, migration from one 4u processor based system to another 4u processor based system will work.

The SIT may be used in conjunction with a client/server network, and can include the utilities and associated scripts for system installations, back-ups ("pushing images"), and recoveries ("pulling images") over the network. The images created when backing up a system over the network are portable to other hardware without "hand-tooling" by a system administrator. In addition to backing up computer systems over a network, the system images may be stored in computer-readable storage media, such as CD-ROM, DVD, or tape.

When SIT is used on a client/server network, a SIT boot proxy may be installed to allow access to the SIT server from another subnet and location. The network version of SIT may also include a server administration tool to securely, using encryption, allow the system administrator to manage clients and allow or deny image access to users and other SIT servers. The SIT has the ability to create and restore images over a secure, encrypted medium, and the ability to perform an automatic update of new SIT software when it is available. With these features in place, SIT servers may function in a distributed environment, and system images may be securely and effortlessly shared over any network. The SIT can include a graphical suite of tools providing the ability to easily manage the server locally or remotely using the same application.

In one embodiment of the invention, each client computer includes an Internet browser, which can be preloaded onto the client computer, or in the case of a portable SIT, included in a portable storage medium. Users can access a SIT web portal using a web browser. Using the Internet, users can access many SIT services from any location at any time. This allows both administrators and users flexibility in meeting their needs, as well as allowing greater management of content being provided through SIT.

Within the SIT there are two categories of users: Administrators and Users. Group management is divided in a similar manner. Administrators can access any image resource and/or SIT service. However, Users are limited to those images they create and images other users give access to.

Through the SIT Web Portal, administrators can effectively manage user accounts from any location. Administrators can add new users, remove users, or assign new users from work, on the go, at home. This flexibility will not only allow those users who need access to images faster, but also prevent unauthorized access to images with more sensitive material.

Accounts are the basis for all functions within SIT. In order to access SIT services, all users must have an assigned account with appropriate group memberships.

The server can provide a management portal for controlling such things as accounts management, image permissions/access rights, server access from clients, enterprise management of image transfers, access to the contents of the image library, and a wide range of configuration management information. The server also provides the infrastructure for booting clients over the LAN to access imaging services, and to transfer images to/from traditional media (e.g. CD, DVD, and Tape).

The image creation process can be interrupted and resumed. The image creation process could possibly be interrupted by power and network outages, server hardware failure, or client hardware failure. To resume the image creation process the client must be restarted. When the user starts the image creation again, the server negotiates the resumption of the image based on the MD5 hash values of all CMINFO data. This CMINFO includes slice layouts, package lists, patches list, etc.

The invention can also provide the ability to create and restore cascading snapshot images, allowing the user to create a plurality of images of the computer's configuration as it changes over time. The cascading images may be used to build a baseline system to a certain point, then branch and re-use the baseline to facilitate other builds.

The SIT allows a system integration facility or Information Technology (IT) shop to develop a common system load, apply security procedures, apply approved software, debug and certify the system to whatever level desired. From this, an approved software load can be distributed through an organization that is consistent. The SIT assists by performing the necessary adjustments in a predictable way and removes the human variable from the equation. This allows the organization to purchase machines that are up to date and not be locked to a specific brand/model combination. It also minimizes support costs for roll out since the system is known to function and is virtually guaranteed to be applied in a consistent manner to every system. Many benefits can be realized from this method of system deployment such as decreased needless system-to-system variations, a more common problem resolution pool, and a more diverse and economical target system base. The tool can also be utilized in other more esoteric ways like sending a software image in to be repaired and keeping a computer system at a remote location while it is being fixed, re-imaged and returned.

While particular embodiments of this invention have been described above for purposes of illustration, it will be evident to those skilled in the art that numerous variations of the details of the present invention may be made without departing from the invention, as defined in the following claims.

## Claims

1. A method of configuring a target computer system in accordance with a computer image, the method comprising the steps of:
determining a hardware configuration of the target system;
reconfiguring a hardware abstraction layer of the target system;
transferring information from the computer image to a storage device in the target computer; and
using the transferred information to reconfigure the target computer.

2. The method of claim 1, wherein the step of reconfiguring a hardware abstraction layer of the target system comprises the step of:
creating, removing and/or modifying device links in the hardware abstraction layer.

3. The method of claim 1, further comprising the steps of:
repartitioning a software layout onto the storage device of the target system;
formatting the storage device according to a desired profile; and
writing software from the computer image to the storage device.

4. The method of claim 1, wherein the step of reconfiguring a hardware abstraction layer of the target system comprises the steps of:
rebuilding a device tree to conform to the target computer hardware configuration; and
rebuilding major/minor numbers which map device drivers to the hardware abstraction layer.

5. The method of claim 1, further comprising the steps of:
creating hardware handles for the target computer; and
rebuilding a path_to_inst file to reflect the hardware handles.

6. The method of claim 1, further comprising the step of:
migrate network information to a network interface controller.

7. The method of claim 1, further comprising the step of:
running custom or third party software to detect and migrate additional hardware or software.

8. The method of claim 1, further comprising the step of:
generating a digital signature of the computer image.

9. The method of claim 8, wherein the step of generating a digital signature of the computer image comprises the step of:
generating hash values of configuration management information.

10. The method of claim 9, further comprising the step of:
checking the computer image integrity by comparing the generated hash values with stored hash values.

11. The method of claim 1, wherein the step of transferring information from the computer image to a storage device in the target computer comprises the steps of:
capturing a partition layout;
capturing disk space usage;
writing an image label;
capturing configuration management information;
dumping file system information;
compressing the file system information;
writing the file system information; and
generating hash data.

12. The method of claim 1, wherein the computer image contains:
an archive of files on a source computer system;
image lineage information; and
configuration management information.
